(19) Europäisches Patentamt / European Patent Office / Office européen des brevets

(11) **EP 3 188 000 A1**

(12) **EUROPEAN PATENT APPLICATION**

(43) Date of publication:
05.07.2017 Bulletin 2017/27

(51) Int Cl.:
*G06F 7/72* (2006.01)

(21) Application number: 15307156.8

(22) Date of filing: 29.12.2015

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **GEMALTO SA**
**92190 Meudon (FR)**

(72) Inventors:
• **MADEC, Steven**
**92190 Meudon (FR)**
• **VIGILANT, David**
**92190 Meudon (FR)**

(74) Representative: **Lotaut, Yacine Diaw**
**Gemalto SA**
**Intellectual Property Department**
**6, rue de la Verrerie**
**92190 Meudon (FR)**

(54) **SYSTEM AND METHOD FOR HIDING A CRYPTOGRAPHIC SECRET USING EXPANSION**

(57) A system, method and computer-readable storage medium with instructions for protecting an electronic device having a processor and an instruction memory against side-channel attacks. The technology improves the ability of the electronic device to defend against side-channel attacks by operating a cryptographic device, to obscure a cryptographic quantity d by operating the processor to inject bits or blocks from an insertion sequence r into the cryptographic quantity d based on a random number R, thereby producing an expanded cryptographic quantity *d'* which is used in lieu of the cryptographic quantity d to perform cryptographic operation by using the second random number R to select between performing a fake operation or a real operation. Other systems and methods are disclosed.

**Fig. 6**

EP 3 188 000 A1

**Description**

**TECHNICAL FIELD**

The present invention relates generally to electronic cryptography technology, and in particular to protecting a security device against side-channel attacks by hiding a cryptographic secret that is processed in a specific order.

**BACKGROUND OF THE INVENTION**

Electronic communication and commerce can be powerful yet dangerous tools. With the wide-spread availability of network technology, such as the Internet, there is an ever increasing use of online tools for communication and commerce. Every year more users find it easier or quicker to conduct important transactions, whether in the form of correspondence or commerce, using computers and computer networks. However, there is always the risk that the security of electronic transactions is compromised through interception by third parties who do not have the right to partake in the transactions. When malicious third parties obtain access to otherwise private transactions and data there is risk of economic loss, privacy loss, and even loss of physical safety. Cryptography is one mechanism employed to avoid intrusion into the privacy of electronic transactions and data.

Cryptography is a technology for hiding a message in the presence of third parties using mathematical techniques in which a message is encrypted in such a way that it can only be decrypted using a secret key that should only be known by the recipient and/or sender of a message.

Cryptographic algorithms have inputs and outputs. In the case of encryption, the input is a message that is to be protected in *plaintext.* The plaintext message is manipulated by the cryptographic algorithm to produce a *ciphertext,* the output. To produce the ciphertext the cryptographic algorithm performs certain mathematical operations that include the use of a secret key. The key may be a shared secret, e.g., between a sender and recipient, or may be a private key held by the recipient.

One frequently used cryptographic technique is the RSA algorithm named for its inventors Rivest, Shamir, and Adelman. To obtain a highly secure ciphertext, the RSA algorithm relies on the difficulty of factoring large integers. A user creates a public key by randomly selecting two large similar-sized prime numbers and multiplies these two numbers together. The result is the *public key* of the user which the user may publish thereby enabling other entities to encrypt messages for the user. While the *public key* is public and anyone can encrypt a message with its use, the encrypted message can only be decrypted using the corresponding *private key* which, in effect, consists of the two prime numbers that were used to generate the public key. It is therefore critical to the security provided by the RSA algorithm that the private keys are kept secret and cannot be discerned by a third party attempting to subvert the secrecy of RSA-encrypted messages.

While the details of the RSA algorithm are beyond this document, for discussion purposes herein the algorithm may be reduced to two complimentary calculations for encryption of a message *M* into a ciphertext *C* and the decryption of the ciphertext *C* back into the message *M.* The *public key* is computed from two large prime numbers *p* and *q.* Using *p* and *q* a number $N = pq$ is computed; *n* is the modulus for both *private* and *public keys.* Furthermore e, the *public key exponent* is computed from *p* and *q,* as follows:

Choose e such that: $1 < e < \varphi(N)$ and the greatest common divisor of (e, $\varphi(N)$) = 1, i.e., e and $\varphi(N)$ are coprime, wherein, $N = pq$ and $\varphi(N)$ is Euler's Totient function.

Thus, the *public key* consists of the pair of integers (*N, e*). The corresponding private key consists of the pair of integers (*N, d*) where $d = e^{-1}$ (mod $\varphi(N)$) where $\varphi(N)$ is Euler's Totient function.

A message *M is* encrypted using the public key (*N, e*) into ciphertext C by:

$$C = M^e \bmod N$$

The message *M* is recovered and decrypted from *C* using the corresponding private key (*N,d*) by:

$$M = C^d \ (\bmod N)$$

RSA may also be used to cryptographically sign a message *M* into a signed message *S,* i.e.,

$$S = M^d \ (\mathrm{mod}\ N)$$

*Side-channel attacks* make use of a program's timing, power consumption, and/or the electronic emanation of a device that performs a cryptographic computation. The behavior of the device (timing, power consumption and electronic emanation) varies depends directly on the program and on the data manipulated in the cryptographic algorithm. An attacker could take advantage of these variations to infer sensitive data leading to the recovery of a private key.

*Fault attacks* derive their name from the practice of creating a fault during the computation and exploiting the result produced by that fault to deduce the secret key. Generally, injecting a fault requires a prior step that consists of determining the most likely successful moment for the fault injection. This prior step is usually done by reverse engineering the program through studying the power or the electronic emanation trace.

Exponentiation operations are vulnerable to side-channel attacks as well as fault attacks, which may allow an attacker to deduce a private key used in the exponentiation. One usual method to protect the cryptographic operation "group exponentiation" for RSA, as well as other cryptography algorithms such as Elliptic Curve Cryptography (ECC), Diffie-Hellman cryptography (DH), ElGamal cryptography, etc., against side channel analysis (SCA) and fault attacks (FA) consists of masking the secret. The most usual way is to perform an additive masking of the secret exponent or scalar. However, that requires the knowledge of additional data, for example, the group order.

Sometimes the group order is not available, as for example in the RSA Standard, where only the secret $d$ and the public modulus $N$ must be known to perform the signature $S = M^d \bmod N$.

In order to be able to additively mask the secret $d$, the group order $\varphi(N)$ must be known (meaning that either $p$ and $q$ must be known, or the public exponent $e$ must be known). In this case the masked secret will be $d' = d +$ random$^*\varphi(N) \cong d +$ random$^*(e^*d{-}1)$ and $S = M^d \bmod N = S = M^{d'} \bmod N$.

Unfortunately the group order is unknown for RSA standard signature, when a public exponent e value is impossible to retrieve. It is not possible to recover the public exponent e when an RSA key is generated using the standard FIPS method (Federal Information Processing Standards, Digital Signature Standard (DSS), FIPS PUB 186-4, Issued July 2013, http://nvlpubs.nist.gov/nistpubs/FIPS/NIST.FIPS.186-4.pdf, accessed on December 16, 2015). Thus without the knowledge of the group order, the secret d will be used unmasked. In this case, d will be protected against SPA attacks only by so called (SPA-safe) exponentiations (square and multiply always, atomic, Montgomery ladder), which attempt to avoid revealing bits '1' and bits '0'. However, these SPA-safe operations can be vulnerable to other types of statistical attacks (e.g., address bit DPA (ISO/IEC 9797, Data cryptographic techniques, Data integrity mechanism using a cryptographic check function employing a block cipher algorithm, 1989), cross correlation (Marc F. Witteman, Jasper G. J. van Woudenberg, Federico Menarin, Defeating RSA multiply-always and message blinding countermeasures, https://www.riscure.com/documents/defeating rsa multiplv-always and message blinding countermeasures.pdf?1378980229, accessed on December 22, 2015), template attacks (S. Chari, J. Rao, and P. Rohatgi, "Template Attacks", CHES 2002, Springer, 2003, LNCS 2523, pp 51{62), MAC algo 3 Attack (B. Feix, H. Thiebeauld, Defeating IS09797-1 MAC Algo 3 by Combining Side-Channel and Brute Force Techniques, 2014 (https://eprint.iacr.org/2014/702.pdf, accessed on, December 20, 2015.).

From the foregoing it will be apparent that there is still a need for an improved technology to provide an improved cryptographic device that is resilient to side-channel attacks by providing a secure mechanism that is computationally efficient that provides the capability of hiding cryptographic secrets so that these secrets are protected from side-channel attacks, for example, differential power analysis attacks.

## BRIEF DESCRIPTION OF THE DRAWINGS

Figure 1 is a schematic illustration of a host computer with a portable security device, e.g., a smart card, connected thereto for performing cryptographic services through connection over a network to one or more servers.

Figure 2 is a schematic illustration of a portable security device.

Figure 3 is a schematic illustration of programs stored in a memory of the portable security device of Figure 2.

Figure 4 is a schematic illustration of a prior art cryptography module program listing that may be stored in the memory of a portable security device as illustrated in Figure 3 and which performs a decryption including exponentiation operations.

Figure 5 illustrates a prior art method for performing a decryption operation using modular exponentiation according to the square-and-multiply-always algorithm.

Figure 6 illustrates a crypto module implementing a modified decryption algorithm using that hides the cryptographic secret in the algorithms of Figure 4 and 5 through expansion of the cryptographic secret.

Figure 7 illustrates a modification to the instructions of Figure 5 to use a cryptographic secret hidden through expansion as illustrated in Figure 6.

Figure 8 illustrates a cipher block chaining message authentication code algorithm.

Figure 9 illustrates a message block sequence expanded by inserting blocks from an insertion block sequence.

## DETAILED DESCRIPTION OF THE INVENTION

In the following detailed description, reference is made to the accompanying drawings that show, by way of illustration, specific embodiments in which the invention may be practiced. These embodiments are described in sufficient detail to enable those skilled in the art to practice the invention. It is to be understood that the various embodiments of the invention, although different, are not necessarily mutually exclusive. For example, a particular feature, structure, or characteristic described herein in connection with one embodiment may be implemented within other embodiments without departing from the spirit and scope of the invention. In addition, it is to be understood that the location or arrangement of individual elements within each disclosed embodiment may be modified without departing from the spirit and scope of the invention. The following detailed description is, therefore, not to be taken in a limiting sense, and the scope of the present invention is defined only by the appended claims, appropriately interpreted, along with the full range of equivalents to which the claims are entitled. In the drawings, like numerals refer to the same or similar functionality throughout the several views.

In an embodiment of the invention, a technology is provided that improves the resilience of cryptographic security devices against side-channel attacks, for example, differential power analysis attacks, wherein the cryptographic security devices contain a cryptographic secret that may be used to digitally sign documents or to decrypt encrypted documents or messages. Specifically, the technology improves such cryptographic devices by improving the protection of such cryptographic secrets from side-channel attacks.

Smart cards are plastic cards with an embedded microprocessor and a secure storage. They are portable, secure, and tamper-resistant. Smart cards provide security services in many domains including telecommunication, banking, commerce, education, medicine, and citizen identity. Smart cards can take different forms, such cards having a credit card form factor with electrical connectors to connect the smart card to a smart card reader, USB tokens with embedded smart cards, and SIM cards for use in mobile telephones and tablet devices. Smart cards are used herein as examples of portable security devices that may be used in implementations of the technology described herein. Other examples of portable security devices include smart memory cards, flash memory, etc. In a preferred embodiment, the portable security device has a processor, a memory for storing programs and data, and some security features to make the device relatively tamper-proof. Smart cards are used herein as examples of such devices.

While the mechanism for masking a cryptographic calculation described herein may be used advantageously in smart cards and other portable security tokens used for performing cryptographic calculations, the same mechanisms may also be used with other cryptographic processors. Thus, smart cards are used herein for illustrative purposes only.

Digital signature and other cryptography are examples of functions that smart cards provide. The smart card stores private or shared secret keys in its secure storage and performs cryptographic operations to generate a digital signature for a given input or to decrypt a given input. A smart card works with a host device, such as a personal computer (PC), cell phone, tablet device or banking terminal. A PC application, such as an email client or a web browser, typically works with a smart card to sign, encrypt, or decrypt a document. The cryptographic operation may be part of a challenge-response mechanism for user authentication. The PC application and the smart card interact through some cryptographic API called middleware, which is designed to communicate with the smart card. In this scenario, the smart card provides services locally to the PC.

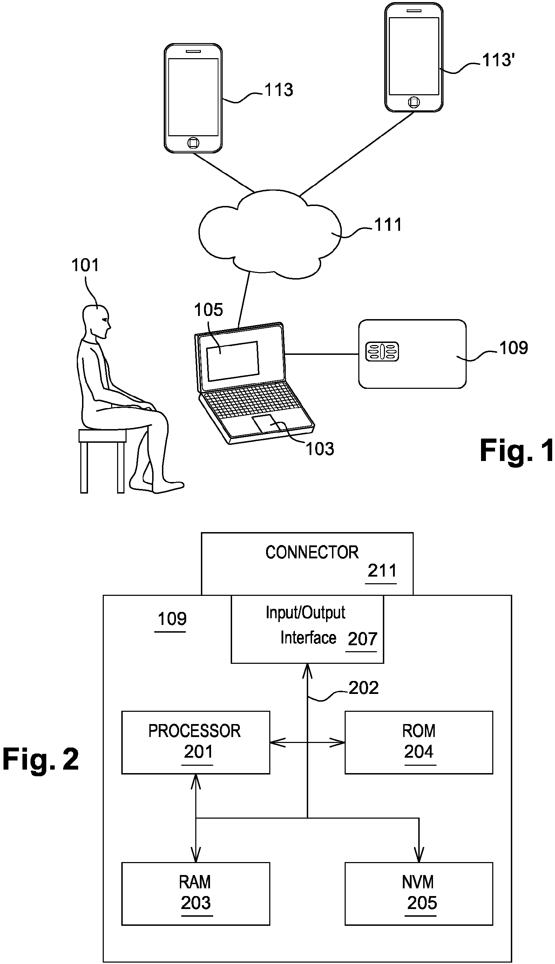

Figure 1 is a schematic illustration of a network 111 connecting a host computer 103 with a portable security device 109, e.g., a smart card, connected thereto, to one or more remote servers 113. The host computer 103 is operated by a user 101 who interacts with one of the servers 113 via a web browser window 105 of a web browser. In the example scenario illustrated in Figure 1, the smart card 109 provides the cryptographic operations on behalf of the user 101, e.g., to cryptographically sign documents, to decrypt messages received from the relying party 113, or to perform a cryptographic operation as part of a challenge-response authentication mechanism.

While Figure 1 provides an illustration of a scenario in which cryptography may play an important role, there are many other important uses for cryptography. Thus, the technology described herein is not limited in its application to the example of use case illustrated in Figure 1.

Figure 2 is a schematic illustration of a portable security device 109, for example, a smart card. The portable security device 109 may include a processor 201 connected via a bus 202 to a random access memory (RAM) 203, a read-only memory (ROM) 204, and a non-volatile memory (NVM) 205. The portable security device 109 further includes an input/output interface 207 for connecting the processor 201, again typically via the bus 202, to a connector 211 by which the portable security device 109 may be connected to the host computer 103.

In alternative embodiments, the connection between the host computer 103 and the portable security device 109 is wireless, for example, using near-field communication (NFC) or other radio or microwave communication technologies.

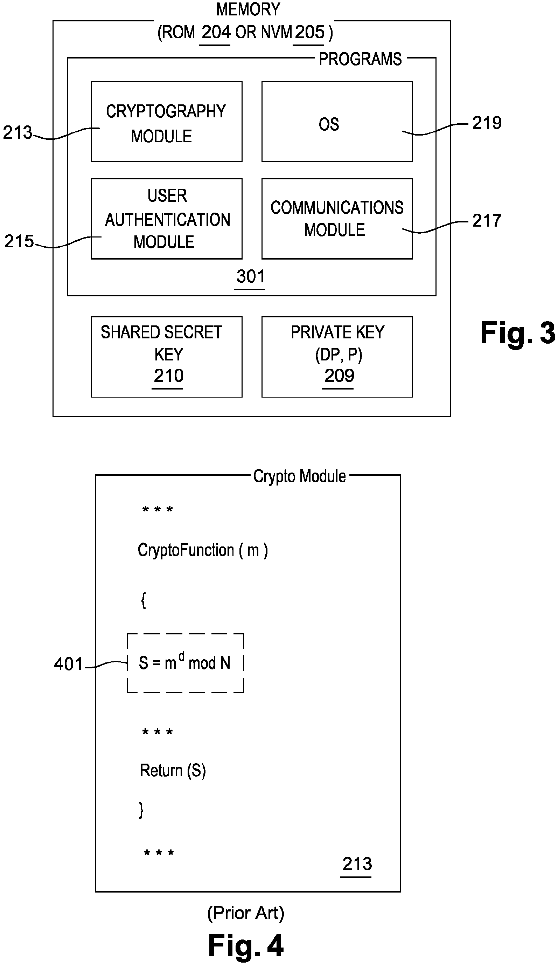

The NVM 205 and/or ROM 204 may include computer programs 301 as is illustrated in Figure 3. While it is here depicted that the computer programs 301 are all co-located in the ROM 204 or the NVM 205, in actual practice there is no such restriction as programs may be spread out over multiple memories and even temporarily installed in RAM 203. Furthermore, the portable security device 109 may include multiple ROMs or NVMs. The programs 301 include operating system programs as well as application programs loaded onto the portable security device 109. The NVM 205 or ROM 204 may also contain private data, such as a private key 209 or a shared secret key 210, stored either in its basic form or in derived quantities.

The portable security device 109 programs 301 may include a cryptography module 213, a user authentication module 215, a communications module 217, and the operating system OS 219.

Thus, the portable security device 109 may receive a document or message via the connector 211. The processor 201, by executing instructions of the cryptography module 213, may digitally sign the document/message or may decrypt the document/message using the private key 209 or shared secret key 210. Using functionality provided through the communications module 217, the processor 201 may receive and transmit communications with the host computer 103.

Figure 4 is a schematic of a possible prior art implementation of the cryptography module 213. The cryptography module 213 would contain one or more functions, methods, or routines. One possible function could be, as is illustrated in Figure 4, a function called *CryptoFunction()* which takes the argument *M,* the message to sign or decrypt. In the cryptography module 213 signature and decryption using the standard RSA equation 401 is an exponentiation of a message by some secret exponent, namely, $S = M^d \bmod N$.

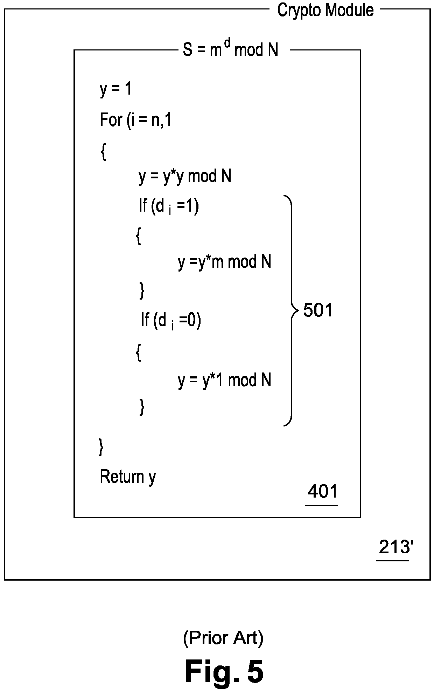

As a person skilled in the art would appreciate, this operation would be reduced to lower level arithmetic statements for the sake of efficiency. A common approach for efficiently calculating $M^d \bmod N$ is the *Square-and-Multiply-Always* algorithm. Figure 5 is a program listing for a crypto module 213' illustrating a traditional square-and-multiply-always procedure for calculating $S = M^d \bmod N$ (algorithm 401), wherein *d* is written in the binary representations

$$d = [d_n, d_{n-1}, d_{n-2}, \ldots, d_3, d_2, d_1]$$

The *Square-and-Multiply-Always* algorithm of Figure 5 is considered SPA-safe, i.e., protected against Simple Power Analysis (SPA) attacks, because it is intended to shield against revealing whether a 1 or a 0 is being processed. However, it may be vulnerable to other types of statistical attacks, e.g., address bit DPA, cross correlation, template attacks, and MAC algo 3 attacks. The same may be said for other techniques for performing exponentiations, e.g., using an atomic operation or Montgomery ladder.

According to an embodiment of the invention described herein below, the crypto module 213 hides the secret exponent from attack in exponentiation algorithms, e.g., in the algorithms of Figures 4 and 5. According to this embodiment, the secret exponent is hidden through expansion. While the technique of hiding a cryptographic secret through an expansion technique is described herein within the context of the exponentiation of a message by a secret exponent, the technique is applicable to other operations that involve a secret. Particularly, the technique is useful for operations that require the processing of bits (or blocks) of data in a predefined order. That is the case of computing an exponentiation according the square-and-multiply-always technique; the exponent must be treated bit-by-bit in a specific order (most significant bit (MSB) to least significant bit (LSB), or vice versa). It is also the case of several cipher block chaining message authentication codes (e.g., CBC-MAC (ISO/IEC 9797, Data cryptographic techniques, Data integrity mechanism using a cryptographic check function employing a block cipher algorithm, 1989, wherein messages are operated on in a block-by-block specific order)).

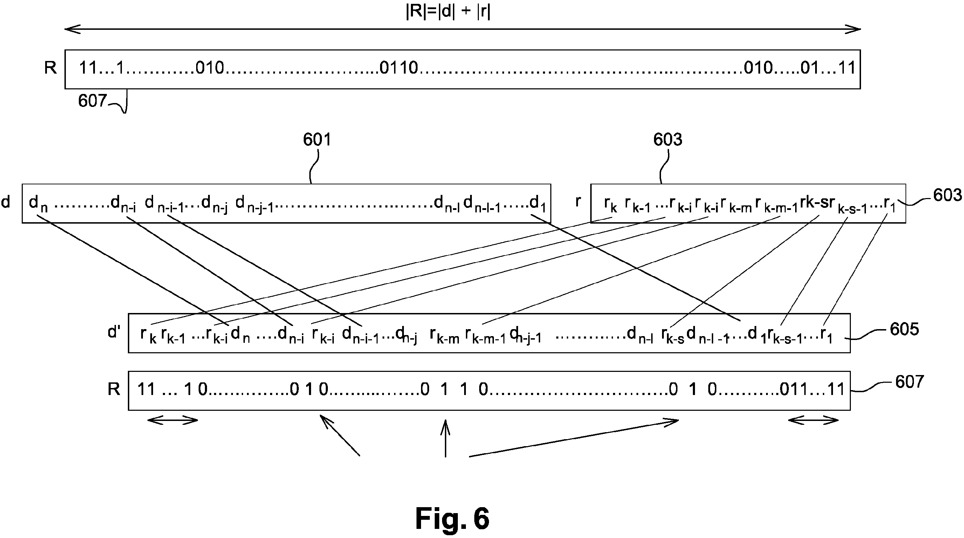

Figure 6 is a schematic illustrating an example in which a secret exponent is hidden by way of expansion. The secret exponent *d* 601 is expanded into an expanded exponent *d'* 603 using an insertion sequence *r* 605 that is mixed into bits of *d* using a random number *R* 607 to define the expansion sequence. In one embodiment, the insertion sequence *r* is generated as a random bit sequence. In an alternative, the insertion sequence *r* is an arbitrary bit sequence.

The notation $|R|=|d| + |r|$ refers to the length of the respective quantities *R, d,* and *r*. Thus, the length of *R* equals the length of *d* plus the length of *r*. Furthermore, an additional constraint of *R* is that the hamming weight of *R* has to be the length of *r* (i.e., a 1 for every bit in *r,* so that for every "1" in *R* we select from *r*). Conversely, the length of *R* has to be the hamming weight of *R* + the length of *d* (i.e., the length is the number of 1 s in *R* plus the number bits in *d,* so that there is a "0" for every bit in d, so that for every "0" in *R* we select from *d*). Otherwise, there will not be the right number of bits in *R, d,* and *r* to allow for the mapping.

According to the mechanism of a preferred embodiment, for each bit in *R* with the value 1, a bit is selected from the insertion sequence *r*. Conversely, for each bit in *R* with the value 0, a bit is selected from the secret *d.* The bits are selected from *r* and *d* sequentially.

Consider the example of Figure 6. The first few leftmost bits of R, let's say the first $j$ bits, all have the value 1. Therefore, in $d'$ the $j$ leftmost bits are given corresponding values from the leftmost $j$ bits of $r$. The next $i$ bits of R have the value 0. Therefore, the next $i$ bits take their value from the leftmost $i$ bits of $d$.

Consider a function f that accepts as input $d$, $r$, and $R$ to produce the output $d'$. Function f may be defined as follows:

$f$(bit index) = "bit not in original exponent" if $R_{bit\_index}$ == 1
$f$(bit_index) = "bit in original exponent" if $R_{bit\_index}$ == 0

The indexes in the *original exponent d* and in the *not in original exponent r* are, of course, advanced as they are being assigned to the output *d'*.

More specifically, the function *f* may be defined as:

```
function f(d,r,R)
/* i = index in R and d'
/* j = index in d
/* | = index in r
j,l,k := 1  For i:= 1 to len(R)
   if R[i] = 1
           d'[i] = r[l]
           l :=l+;
   else
           d'[i] = d[j]
           j :=j+;
return d'.
```

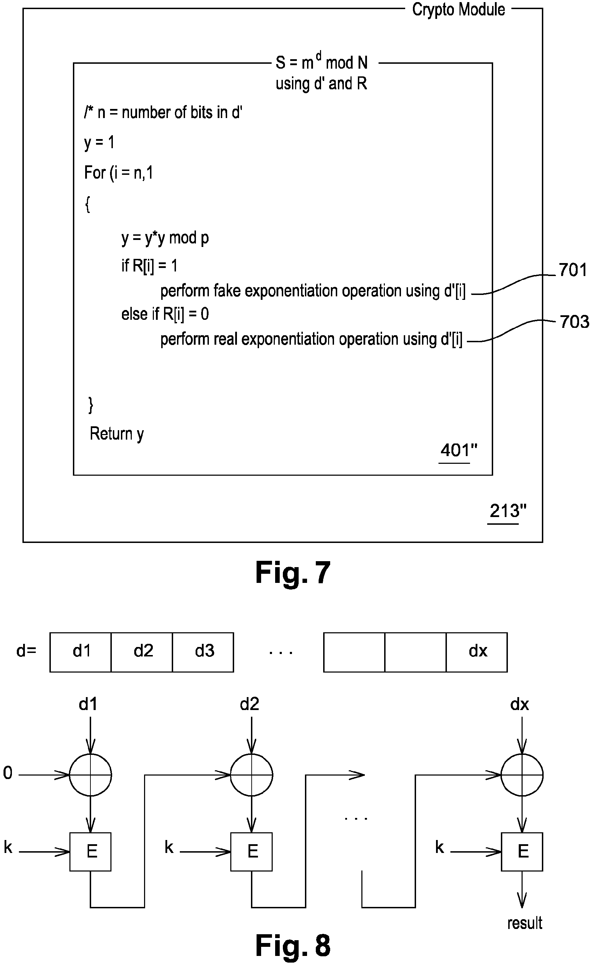

Returning now to the modular exponentiation algorithm 401 of Figure 5. Consider, the code sequence 501 as the *real exponentiation* operation, i.e., the operation that would normally be performed for each bit of the secret exponent $d$ in order to compute $S = m^d$ mod $N$. Figure 7 illustrates an implementation of a crypto module 213" that is a modification of the crypto module 213' of Figure 5. In the exponentiation operation 401" of Figure 7, the operation iterates using the index $i$ over all bits in $d'$, i.e., from $n$ down to 1 where $n$ is the length of $d'$ (as well as of $R$). If a bit $R[i]$ has the value 1, a fake exponentiation operation 701 is performed. Otherwise, the real exponentiation operation 703 (e.g., the exponentiation of Fig 5) is performed.

The expanded exponentiation of Figure 7 is performed in an SPA-safe way. It may thus be implemented, for example, as a square-and-multiply-always algorithm in the style of Figure 5, as a Montgomery ladder or as an atomic operation. The fake exponentiation operation 701 is implemented to perform operations similar to those of the real exponentiation operation 703 so that it is impossible to distinguish $d$ bits from $r$ bits. De facto, the desynchronisation and the temporal masking introduced by $r$ protects against statistical attacks, for example, of the type that relies on a dictionary or a template. Indeed the attacker is not able to link a pattern in the time with a bit location in the exponent, which allows for the avoidance of such attacks.

While the above technique has been described in the context of protecting a secret, for example, a secret exponent $d$, the technique may be applied to the processing of other quantities besides secrets, e.g., a message being decrypted, where that processing may reveal a secret or some other aspect of a calculation that is to be protected from attack.

CBC-MAC is a technique for constructing a message by encrypting the message using a block cipher algorithm to create a chain of blocks such that each block depends on the proper encryption of the previous block. Thus, the order in which blocks are processed is a key aspect of the CBC-MAC algorithm. In the CBC-MAC algorithm, a message $d$ is considered to comprise $x$ blocks $d_1, d_2, ..., d_x$. A message is usually designated using the variable $m$ and the cryptographic secret exponent using the variable $d$. However, to be consistent with the discussion above, $d$ is used here to designate the quantity that is being expanded. Thus, $d$ here is the designated message. The message may be hidden using the technique described herein by expanding the message through introduction of *fake* blocks into the sequence of blocks $d_i$ by using the technique above for inserting bits into a binary secret. This also applies to other MAC algorithms.

Figure 8 is a schematic illustration of the CBC-MAC algorithm. The message $d$ here is broken into $x$ blocks, $d1 ... dx$. Each of the message blocks $di$ is fed into an XOR_operation, the output of which is encrypted using the key $K$ to produce an intermediate encryption result $E$. The output $E$ is then XORed with the next block $d_{i+1}$. Thus, the message blocks are operated on in a specified sequence.

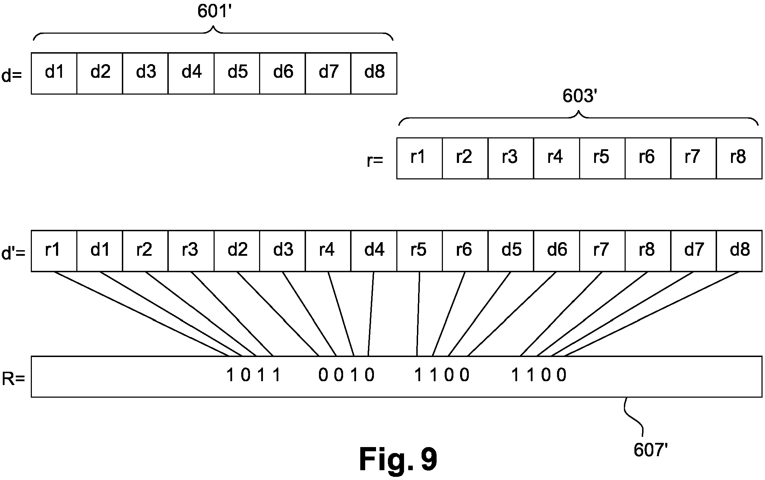

Thus, while the technique is described above for the insertion of random bits into a binary number, such as a secret exponent, the technique may be generalized to the insertion of blocks of data into a sequence of blocks of data, so as to apply to a message block sequence as illustrated in Figure 8. The adaptation of the technique to a sequence of message blocks is illustrated in Figure 9. A sequence of message blocks $d$ 601' is expanded using the insertion block sequence $r$ 603'. The random number $R$ 607' is used to select the blocks from the message block sequence $d$ and the insertion block sequence $r$, respectively, thereby producing the expanded block sequence $d'$. As in the bitwise algorithm described herein above, a bit in $R$ with value 1 indicates the insertion of the next block from $r$ and, similarly, a bit in $R$ with a value 0 indicates the insertion of the next block from $d$, thereby producing $d'$.

As with the bitwise operation, when processing the expanded quantity $d'$, the random sequence $R$ is used to decide whether to perform the true cryptographic operation or a *fake* operation in its stead.

Thus, the binary number as illustrated in Figures 6 and 7 may be considered a specific case of blocks of size 1. The quantity $R$ is then used as a key to determine where to insert fake blocks from an insertion sequence of blocks, analogous to the bits in the insertion bit sequence $r$, into a sequence of blocks to be processed.

From the foregoing it is evident that a mechanism is presented herein that improves a cryptographic device that protects a cryptographic secret against side-channel attacks including statistical attacks such as differential power analysis (DPA) and templates in a highly efficient manner even in situations where the group order of the secret is unknown. The technique is useful for instance in the RSA standard where the group order of the cryptographic secret typically is not known and cannot be derived. The advances described herein can be combined with SPA-safe exponentiation algorithms (i.e., techniques that avoid distinguishing '0' from '1') and also with a classical masking method to protect against high order attacks. In cases where classical masking cannot be applied, the described techniques provide protection against safe-error attacks (exploiting true/fake results by fault injection (e.g., as is often found in attacks against square-and-multiply always exponentiation)). Where the techniques described herein are used in exponentiation steps of cryptographic operations, these can be executed approximately as fast and as efficient as a classical masking method.

The above-described mechanism has been described in the context of the square-and-multiply-always technique. The mechanism is readily adapted to other exponentiation techniques. Furthermore, the technique may be used in other operations that involve a secret quantity, especially in operations where bits are scanned in one specific direction. That is the case for exponentiation. However, other examples include processing of MAC (for example, CBC-MAC) calculations.

Although specific embodiments of the invention have been described and illustrated, the invention is not to be limited to the specific forms or arrangements of parts so described and illustrated. The invention is limited only by the claims.

**Claims**

1.    A method for operating a cryptographic device, having a processor and an instruction memory, to obscure a quantity $d$ during performance of a cryptographic operation by operating the processor to perform the steps:

generating a random number $R$;
injecting data from an insertion sequence $r$ into the cryptographic quantity $d$ based on the random number $R$ thereby producing an expanded cryptographic quantity $d'$;
using the expanded quantity $d'$ *in* lieu of the cryptographic quantity $d$ to perform cryptographic operation by using the random number $R$ to select between performing a fake operation or a real operation.

2.    The method for operating a cryptographic device to obscure a cryptographic quantity $d$ of Claim 1 further comprising:

generating the insertion sequence $r$ as a random number or establishing the sequence $r$ as an arbitrary value.

3.    The method for operating a cryptographic device to obscure a cryptographic quantity $d$ of any preceding claim, wherein the cryptographic quantity $d$ is a sequence of bits and the insertion sequence $r$ is a sequence of bits.

4.    The method for operating a cryptographic device to obscure a cryptographic quantity $d$ of any preceding claim, wherein the step of injecting data from the insertion sequence $r$ into the cryptographic quantity $d$ comprises:

for each bit $R_i$ in the random number $R$, if the bit $R_i$ has a value corresponding to insertion-from-the-insertion-sequence, inserting corresponding data from the insertion sequence $r$ into the expanded cryptographic quantity $d'$ and if the bit $R_i$ has the value corresponding to insertion-from-the-cryptographic-quantity, inserting corresponding data from the cryptographic quantity $d$ into the expanded cryptographic quantity $d'$.

5.    The method for operating a cryptographic device to obscure a cryptographic quantity $d$ of Claim 1, wherein the step of injecting bits from the insertion sequence $r$ into the cryptographic quantity $d$ comprises:

> looping over all bits in $R$,
> for each bit in $R$ that has a value corresponding to insertion-from-the-insertion-sequence, inserting a next data block from the insertion sequence $r$ into the expanded cryptographic quantity $d'$ and advancing a pointer to the next block from the insertion sequence, and
> for each bit in $R$ that has a value corresponding to insertion-from-the-cryptographic-quantity, inserting a next block from the cryptographic quantity $d$ into the expanded cryptographic quantity $d'$ and advancing a pointer to the next block from the cryptographic quantity.

6. The method for operating a cryptographic device to obscure a cryptographic quantity $d$ of Claim 1, wherein the step of the expanded quantity $d'$ in lieu of the cryptographic quantity $d$ to perform cryptographic operation, comprises:

> looping over all bits in $R$,
> for each bit in $R$ that has a value corresponding to insertion-from-the-insertion-sequence, performing the fake cryptographic operation; and
> for each bit in $R$ that has a value corresponding to insertion-from-the-cryptographic-quantity, performing the real cryptographic operation.

7. The method for operating a cryptographic device to obscure a cryptographic quantity $d$ of any of the preceding claims wherein the cryptographic operation is an operation in which bits of the cryptographic quantity $d$ are processed in a defined sequence.

8. The method for operating a cryptographic device to obscure a cryptographic quantity $d$ of any of the preceding claims wherein the cryptographic operation is an exponentiation using a cryptographic secret, the cryptographic quantity $d$ being the cryptographic secret, and the method comprises using the expanded cryptographic quantity in lieu of the cryptographic secret $d$.

9. The method for operating a cryptographic device to obscure a cryptographic quantity $d$ of any of the preceding claims wherein the cryptographic quantity is a sequence of bits and the insertion sequence is a sequence of bits and wherein insertion of data from the insertion sequence comprises insertion of a bit from the insertion sequence.

10. The method for operating a cryptographic device to obscure a cryptographic quantity $d$ of any of Claims 1 through 8 wherein the quantity $d$ is a sequence of blocks of data and the insertion sequence is a sequence of blocks and wherein the insertion of data from the insertion sequence comprises insertion of a block from the insertion sequence of blocks.

11. The method for operating a cryptographic device to obscure a cryptographic quantity $d$ of Claim 10 wherein the cryptographic operation is a block chaining message authentication code.

12. The method for operating a cryptographic device to obscure a cryptographic quantity $d$ of Claim 11 wherein the block chaining message authentication code is a cipher block chaining message authentication code (CBC-MAC).

13. The method for operating a cryptographic device to obscure a cryptographic quantity $d$ of any of the preceding claims wherein the fake cryptographic operation has the same power signature as the real cryptographic operation.

14. A cryptographic device comprising a processor and an instruction memory operated to perform the method to obscure a quantity $d$ during performance of a cryptographic operation according to any previous claims.

15. The cryptographic device according the previous claim, wherein said cryptographic device is a smart card.

**Fig. 1**

**Fig. 2**

| CONNECTOR | | |
| 211 | | |

Input/Output Interface 207

109

202

| PROCESSOR 201 | | ROM 204 |

| RAM 203 | | NVM 205 |

MEMORY
(ROM 204 OR NVM 205 )

PROGRAMS

| | |
|---|---|
| CRYPTOGRAPHY MODULE | OS |
| USER AUTHENTICATION MODULE | COMMUNICATIONS MODULE |

213

215

219

217

301

| | |
|---|---|
| SHARED SECRET KEY 210 | PRIVATE KEY (DP, P) 209 |

**Fig. 3**

Crypto Module

\* \* \*

CryptoFunction ( m )

{

401 — $S = m^d \bmod N$

\* \* \*

Return (S)

}

\* \* \*

213

(Prior Art)

**Fig. 4**

Crypto Module

$S = m^d \bmod N$

```
y = 1
For (i = n,1
{
        y = y*y mod N
        If (d i =1)
        {
                y =y*m mod N
        }
         If (d i =0)
        {
                y = y*1 mod N
        }
}
Return y
```

} 501

<u>401</u>

<u>213'</u>

(Prior Art)

# Fig. 5

Fig. 6

Crypto Module

$$S = m^d \bmod N$$
using d' and R

/* n = number of bits in d'

y = 1

For (i = n,1

{

    y = y*y mod p

    if R[i] = 1

        perform fake exponentiation operation using d'[i] ——— 701

    else if R[i] = 0

        perform real exponentiation operation using d'[i] ——— 703

}

Return y

401"

213"

# Fig. 7

d = | d1 | d2 | d3 | · · · | | | dx |

# Fig. 8

Fig. 9

Europäisches
Patentamt

European
Patent Office

Office européen
des brevets

## EUROPEAN SEARCH REPORT

Application Number

EP 15 30 7156

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2012/159186 A1 (FARRUGIA AUGUSTIN J [US] ET AL) 21 June 2012 (2012-06-21) * paragraphs [0002], [0154] - [0166] * ----- | 1-3,7-15 | INV. G06F7/72 |
| A | EP 2 326 041 A1 (GEMALTO SA [FR]) 25 May 2011 (2011-05-25) * paragraphs [0004], [0005] * ----- | 1-12 | |

TECHNICAL FIELDS
SEARCHED     (IPC)

G06F

The present search report has been drawn up for all claims

| Place of search | Date of completion of the search | Examiner |
|---|---|---|
| Munich | 20 June 2016 | Prins, Leendert |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 15 30 7156

This annex lists the patent family members relating to the patent documents cited in the above-mentioned European search report.
The members are as contained in the European Patent Office EDP file on
The European Patent Office is in no way liable for these particulars which are merely given for the purpose of information.

20-06-2016

| Patent document cited in search report | | Publication date | Patent family member(s) | | Publication date |
|---|---|---|---|---|---|
| US 2012159186 | A1 | 21-06-2012 | NONE | | |
| EP 2326041 | A1 | 25-05-2011 | EP | 2326041 A1 | 25-05-2011 |
| | | | WO | 2011061263 A1 | 26-05-2011 |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Federal Information Processing Standards, Digital Signature Standard (DSS). *FIPS PUB 186-4,* July 2013, http://nvlpubs.nist.gov/nistpubs/FIPS/NIST.FIPS.186-4.pdf
- **MARC F. WITTEMAN ; JASPER G. J. VAN WOUDENBERG ; FEDERICO MENARIN.** *Defeating RSA multiply-always and message blinding counter-measures,* 22 December 2015, https://www.riscure.com/documents/defeating rsa multiplv-always and message blinding countermeasures.pdf?1378980229

- Template Attacks. **S. CHARI ; J. RAO ; P. ROHATGI.** CHES 2002. Springer, 2003, 51
- **B. FEIX ; H. THIEBEAULD.** Defeating IS09797-1 MAC Algo. Combining Side-Channel and Brute Force Techniques, 2014, vol. 3